# EUROPÄISCHE PATENTSCHRIFT

(11) **EP 0 947 531 B1**
(45) Veröffentlichungstag und Bekanntmachung des Hinweises auf die Patenterteilung: **11.07.2001**
(21) Anmeldenummer: 99105280.4
(22) Anmeldetag: 15.03.1999
(51) Int. Cl.: C08G 18/80

(54) **Malonesterblockierte Polyisocyanate mit Formaldehyd gegen Thermovergilbung stabilisiert**
Malonic ester blocked polyisocynanates stabilised with formaldehyde against heat yellowing
Polyisocyanates bloqués avec des esters maloniques et stabilisés avec le formaldéhyde contre le jaunissement

(30) Priorität: 26.03.1998 DE 19813352
(43) Veröffentlichungstag der Anmeldung: 06.10.1999
(73) Patentinhaber: BAYER AG, 51368 Leverkusen (DE)
(72) Erfinder: König, Eberhard Dr., 51375 Leverkusen (DE); Kobusch, Claus Dr., 40667 Meerbusch (DE); Küttner, Wolfram, 51467 Bergisch Gladbach (DE)

(56) Entgegenhaltungen:
- EP-A- 0 600 314
- DE-A- 19 637 334
- US-A- 4 518 522
- US-A- 4 677 180
- US-A- 5 523 377

## Beschreibung

Die Erfindung betrifft malonesterblockierte Polyisocyanate, die mit Formaldehyd gegen Thermovergilbung stabilisiert sind. Malonester als Isocyanatblockierungsmittel ist seit langem bekannt (Liebigs An. Chem. 562 (1949) S. 205 ff). Eine spezielle neuere Variante dieser Blockierungsart wird beispielsweise in der EP-A 600 314 beschrieben. Die Vorteile von mit CH-aciden Estern blockierten Polyisocyanatvernetzern liegen darin, daß mit ihnen Vernetzungstemperaturen von ca. 100°C erreicht werden und daß diese Blockierungsmittel großtechnisch leicht handhabbar sind.

Blockierte Polyisocyanate mit niedrigen Vernetzungstemperaturen von ca. 100°C stellen dann eine attraktive technische Alternative zu Melamin-Formaldehyd-Harzen dar, wenn diese nicht zu Vergilbungen neigen, welche durch das Blockierungsmittel verursacht werden.

Es ist bekannt, daß Einkomponenten-PUR-Einbrennlacke, in denen Polyisocyanate, die mit Malonester und/oder Acetessigester blockiert sind, bei der Anwendung, besonders unter Überbrennbedingungen, zu starker Vergilbung neigen. Aus der DE-A 19 637 334 ist bekannt, daß durch Zugabe von Hydraziden und am N-Atom unsubstituierten HALS-Aminen zu blockierten Isocyanaten die Vergilbungsneigung verhindert werden kann. Jedoch sind diese blockierten Isocyanate auch dann nicht für alle Bereiche der Automobillackierung einsetzbar.

Aufgabe der Erfindung ist, Polyisocyanate, die mit CH-aciden Estern blockiert sind, zur Verfügung zu stellen, die keine Thermovergilbung zeigen.

Gegenstand der Erfindung sind aliphatische und/oder cycloaliphatische Polyisocyanate, deren Isocyanatgruppen mit CH-aciden Estern blockiert sind und die einen Gehalt an blockierten Isocyanatgruppen (berechnet als NCO) von insgesamt 5 bis 20, vorzugsweise 7 bis 15 Gew.-% aufweisen, dadurch gekennzeichnet, daß die blockierten Polyisocyanate weiterhin einen Gehalt, bezogen auf Feststoff, an den folgenden stabilisierenden Verbindungen aufweisen:
A) 0,1 bis 5,0 Gew.-% Formaldehyd und gegebenenfalls
B) bis zu 10,0 Gew.-% einer Stabilisator(mischung) aus 1:10 bis 10:1 an
   B1) HALS-Aminen, deren Piperidinylstickstoff unsubstituiert ist und
   B2) Hydrazidgruppen enthaltenden Verbindungen.

Gegenstand der Erfindung ist auch ein Verfahren zur Herstellung der erfindungsgemäßen stabilisierten blockierten Polyisocyanaten aus
a) 100 Äquivalent-% an aliphatischen und/oder cycloaliphatischen Polyisocyanatkomponenten,
b) 85 bis 100 Äquivalent-% eines Blockierungsmittels aus der Gruppe der CH-aciden Ester,
c) 0 bis 15 Äquivalent-% an einbaubaren Hydrazidverbindungen,
d) 0 bis 5 Gew.-%, bezogen auf blockiertes Polyisocyanat, an Aminen mit der Struktureinheit der Formel (I) 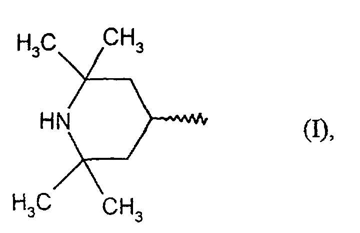 und
e) 0,1 bis 5,0 Gew.-%, bezogen auf blockiertes Polyisocyanat, an Formaldehyd, dadurch gekennzeichnet, daß der Formaldehyd e) nach erfolgter Blockierung der Polyisocyanatkomponente a) zugesetzt wird.

Gegenstand der Erfindung ist schließlich die Verwendung der erfindungsgemäßen blockierten Polyisocyanate als Vernetzer für organische Polyhydroxylverbindungen in PUR-1K-Einbrennlacken, insbesondere für die Bumperlackierung, die bei relativ niedriger Einbrenntemperatur von ca. 100°C durchgeführt wird.

Erfindungswesentlich für die beanspruchten Polyisocyanat-Vernetzer ist der Gehalt an Formaldehyd. Auf 100 Äquivalent-% blockiertes Polyisocyanat werden in der Regel 0,05 bis 0,2 Mol Paraformaldehyd eingesetzt und einreagiert. Dies sind ca. 0,5 bis 2,0 Gew.-% Formaldehyd, bezogen auf blockiertes Polyisocyanat. Bevorzugt ist ein Formaldehydgehalt von 0,8 bis 1,2 Gew.-%, bezogen auf blockiertes Polyisocyanat.

Das erfindungsgemäße Verfahren wird folgendermaßen durchgeführt:

Die Polyisocyanatkomponente wird zusammen mit wenig Lösemittel, z.B. 1-Methoxy-2-propylacetat, bei ca. 50°C vorgelegt, der CH-acide Ester, z.B. Malonester, wird als Mischung mit der Base, ca. 2 % einer 30 %igen Na-Methylatlösung, hinzudosiert und bei erhöhter Temperatur von 60 bis 90°C umgesetzt bis sämtliche NCO-Gruppen abreagiert, d.h. blockiert, sind. In einer Verfahrensvariante, bei der noch zusätzlich ein über Hydrazidgruppen verfügender Stabilisator über OH-Gruppen eingebaut werden soll, verfährt man so, daß z.B. 90 Äquivalent-% der Polyisocyanatkomponente mit dem CH-aciden Ester blockiert und die restlichen 10 NCO-Äquivalent-% mit den OH-Gruppen des Hydrazidstabilisators abreagiert werden. Sind keine NCO-Gruppen mehr vorhanden, so wird Paraformaldehyd, gelöst in z.B. Isobutanol und einer kleinen Menge einer Base (ca. 3 %, bezogen auf Paraformaldehyd), bei 40 bis 50°C zu dem blockierten Polyisocyanat gegeben. Man rührt ca. 30 Minuten bei 40°C nach und stellt mit ca. 3 g Dibutylphosphat einen pH-Wert von ca. 7,5 bis 7,0 ein. In diese Lösung können zusätzlich noch andere Stabilisatoren, z.B. verschiedene HALS-Amine, gegeben werden.

Die erfindungsgemäß blockierten und stabilisierten Polyisocyanate stellen klare, blaß gelbe Lösungen mit guter Lagerstabilität dar. Der für diese Polyisocyanate erfindungswesentliche Formaldehyd befindet sich in gebundener Form an dem Vernetzermolekül. Mittels Analytik können nur 0,001 % an freiem Formaldehyd gemessen werden.

Bei den den erfindungsgemäßen blockierten Polyisocyanaten zugrundeliegenden Polyisocyanaten handelt es sich um bekannte Lackpolyisocyanate mit aliphatisch und/oder cycloaliphatisch gebundenen Isocyanatgruppen und einem Isocyanatgehalt von 7 bis 30, vorzugsweise 12 bis 25 Gew.-%.

In Betracht kommen die an sich die bekannten Biuret-, Isocyanurat- und/oder Uretdiongruppen aufweisenden Lackpolyisocyanate auf Basis von 1,6-Diisocyanatohexan (HDI), 1-Isocyanato-3,3,5-trimethyl-5-isocyanatomethyl-cyclohexan (IPDI) und/oder Bis-(4-isocyanatocyclohexyl)-methan (H₁₂MDI bzw. Desmodur W / Bayer AG). Außerdem können als Polyisocyanatkomponenten die asymetrisch trimerisierten, also neben Isocyanurat auch über Aminooxadiazindiongruppen verfügende Lackpolyisocyanate auf Basis von 1,6-Diisocyanatohexan eingesetzt werden, wie sie z.B. in der EP-A 798 299 beschrieben sind.

Besonders bevorzugt als Polyisocyanatkomponente sind jedoch Isocyanuratgruppen aufweisende Mischpolyisocyanate aus überwiegend Desmodur W und geringen Anteilen IPDI und HDI, beispielsweise Mischtrimerisate aus Desmodur W, IPDI und HDI im Gew.-Verhältnis 7:2:1.

Als Blockierungskomponente kommen CH-acide Ester, beispielsweise Malonsäurediethylester oder Acetessigsäureethylester und/oder deren Methyl-, Isopropyl-, Isobutyl- oder tert.-Butyl-Derivate in Betracht. Bevorzugt sind Malonsäurediethylester und Acetessigsäureethylester.

Als Stabilisierungskomponente wird Formaldehyd, bevorzugt in Form von Paraformaldehyd, eingesetzt.

Als weitere Stabilisierungskomponenten werden die aus der DE-A 19 637 334 bekannten Stabilisatoren eingesetzt werden. Bevorzugt sind in diesem Zusammenhang das durch Addition von Hydrazinhydrat an 2 Mol Propylencarbonat gut zugängliche einbaubare Hydrazid der Formel 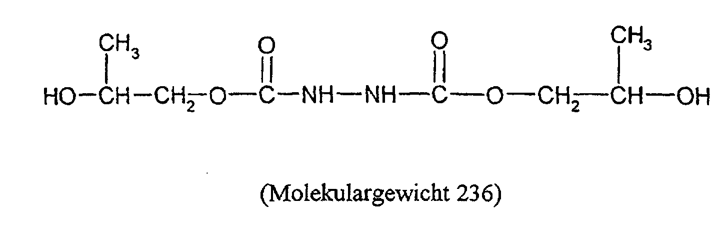 und das am N-Atom unsubstituierte HALS-Amin Tinuvin 770 DF® (Fa. Novartis). Vom erstgenannten Stabilisator werden hierbei vorzugsweise 3 bis 6 Gew.-%, vom letztgenannten vorzugsweise 0,5 bis 1,5 Gew.-%, jeweils bezogen auf blockiertes Polyisocyanat, eingesetzt.

An Lösemittel können die an sich aus der Polyurethanchemie bekannten, gegen NCO-Gruppen inerten Lösemittel, beispielsweise 1-Methoxy-2-propylacetat, Solventnaphta 100 oder Butylacetat, verwendet werden. Sind die NCO-Gruppen blockiert, so verwendet man auch bevorzugt Alkohole, z.B. Isobutanol, um eine Umesterung mit den Alkoholresten des Blockierungsmittels zu ermöglichen.

Der Vorteil der erfindungsgemäßen Polyisocyanatvernetzer, nämlich die deutlich verbesserte Stabilität gegen Thermovergilbung, wird anhand der folgenden Beispiele erläutert.

### Beispiele

### Beispiel 1 (erfindungsgemäß)

Dieses blockierte Polyisocyanat ist mit 0,9 % Formaldehyd, bezogen auf den Festkörper des blockierten Polyisocyanates, stabilisiert. Daneben befinden sich noch zwei weitere Stabilisatoren (vergl. DE-A 19 637 334) teilweise eingebaut bzw. hinzugemischt in der blockierten Polyisocyanat-Lösung, nämlich 4,2 % eines unten erläuterten Hydrazids und 1,0 % eines HALS-Amines.

### A) Herstellung der Polyisocyanatkomponente

### Ansatz:

| | | |
|---|---|---|
| 700,0 g | (5,34 Val) | Desmodur W (Bayer AG) |
| 200,0 g | (1,80 Val) | 1-Isocyanato-3,3,5-trimethyl-5-isocyanatomethyl-cyclohexan (IPDI) |
| 100,0 g | (1,19 Val) | 1,6-Diisocyanatohexan (HDI) |
| 1000,0 g | (8,33 Val) | Diisocyanatgemisch, NCO-Gehalt: Ber. 34,98 % |
| | -(2,92 Val) | 70 %ige Trimerisierung der Hälfte der vorhandenen NCO-Gruppen mit ca. 2,5 g 5 %iger Triton-B-Lösung in n-Butanol |
| 1000,0 g | (5,41 Val) | NCO-Gehalt: Gef. 22,7 % |
| 250,0 g | | Methoxypropylacetat |
| 1250,0 g | (5,36 Val) | NCO-Gehalt: Gef 18,0 % |
| | | 80 %ige Lösung eines Isocyanuratgruppen enthaltenden Mischpolyisocyanates |

### Durchführung:

Die Diisocyanatmischung A wird bei Raumtemperatur unter Rühren und Vakuum entgast (Beseitigung des gelösten schwach sauren Kohlendioxids), mit Stickstoff "belüftet" und auf ca. 70°C erwärmt. Man gibt, fein dosiert, solange von der obigen Katalysatorlösung hinzu, bis die Trimerisierungsreaktion exotherm anspringt. Dabei hält man durch gelegentliche weitere Katalysatorzugaben die Umsetzung bei 80 bis 86°C, bis nach ca. 1,5 Stunden der NCO-Gehalt auf den berechneten Wert von 22,7 % abgesunken ist. Jetzt verdünnt man mit Methoxypropylacetat und erhält eine blaß gelbe, schwach trübe Lösung eines mischtrimerisierten Lackpolyisocyanates mit einer Viskosität (23°C) von ca. 1000 mPa·s, einem NCO-Gehalt von ca. 18,0 % und einem NCO-Äquivalent von ca. 233,0 g.

### B) Herstellung des blockierten und stabilisierten Polyisocyanates

### Ansatz:

| | | |
|---|---|---|
| 233,0 g (1,0 Val) | Polyisocyanatlösung gemäß 1A) | |
| 148,0 g (0,925 Mol) | Malonsäurediethylester, katalysiert mit 3 g 30 %iger Namethylatlösung in Methanol | |
| 14,2 g (0,12 Val) | des im Text erläuterten Hydrazin-Adduktes aus 1 Mol Hydrazinhydrat und 2 Mol Propylencarbonat mit Molekulargewicht 236 | |
| 3,5 g | Tinuvin 770 DF (Novartis AG) | |
| 71,8 g | Methoxypropylenacetat | |
| 3,0 g (0,1 Mol) | Paraformaldehyd, gelöst in der nachstehenden Isobutanolmenge und 0,1 g Na-Methylatlösung (30 %ig) | |
| 118,4 g | Isobutanol | |
| 3,0 g | Dibutylphosphat | |
| 594,9 g (0,925 Val) | blockierte NCO-Gruppen | |
| | Festkörpergehalt: | Ber. 60 % |
| | blockierter NCO-Gehalt | 6,5 % |
| | Viskosität (23°C): | ca 900 mPa·s |
| | Aussehen: | klar, Hazen 55 |
| | NCO-Äquivalent (blockiert): | 645 g |

### Durchführung:

Die Polyisocyanatlösung gemäß Stufe 1 A) wird unter Rühren auf ca. 50°C erwärmt. Hierzu gibt man portionsweise die Mischung aus Malonsäurediethylester und Na-Methylatlösung. Die Blockierungsreaktion ist anfänglich exotherm. Man dosiert die Zugabe so, daß die Temperatur auf 70°C steigt, danach rührt man noch 3 Stunden bei ca. 70°C nach, bis der NCO-Gehalt auf ca. 0,85 % abgefallen ist, berechnet sind 0,82 %. Dann fügt man das Hydrazinaddukt in einem Guß hinzu und rührt 10 Stunden bei 80°C, bis kein NCO-Gehalt IR-spektroskopisch mehr nachweisbar ist. Man läßt auf ca. 50°C abkühlen und gibt die klare Lösung aus den obigen Mengen an Paraformaldehyd, Isobutanol und Na-Methylatlösung hinzu und rührt 30 min. bei ca. 40°C nach. Anschließend wird mit obiger Menge an Dibutylphosphorsäure versetzt. Es resultiert ein pH-Wert von 7,6.

Man erhält eine klare Lösung (Hazenfarbzahl ca. 55) mit einer Viskosität (23°C) von ca. 900 mPa·s, einem rechnerischen Festkörpergehalt von 60 % und einem berechneten NCO-Äquivalent (blockiert) von ca. 645 g.

### Beispiel 2 (Vergleichsbeispiel)

Dieses blockierte Polyisocyanat unterscheidet sich von dem erfindungsgemäßen (Beispiel 1) nur durch das Fehlen von Paraformaldehyd. Sein NCO-Äquivalent (blockiert) beträgt 640 g.

### Beispiel 3 (Anwendungsbeispiel, erfindungsgemäß)

Dieses Beispiel demonstriert die Herstellung von Klarlacken mittels der Polyisocyanatvernetzer gemäß der Beispiele 1 und 2 sowie den Unterschied in der Thermovergilbung.

| Klarlackrezeptur (Gew.-Teile) | 1 | 2 |
|---|---|---|
| Desmophen A 665, 65 %ige Lff. in Butylacetat/Xylol, Bayer AG, hydroxyfunktionelles Copolymerisat, 1 Val OH=567 g | 82,61 | 82,61 |
| Baysilonöl OL 17, 10 %ige Lff. in Xylol, Bayer AG | 1,10 | 1,10 |
| DBTL, 10 %ige Lff. in Methoxypropylacetat (MPa), Chemische Werke München | 5,48 | 5,48 |
| Tinuvin 1130, 10 %ig in MPa | 10,96 | 10,96 |
| Tinuvin 292, 10 %ig in MPa, beide von Novartis AG | 10,96 | 10,96 |
| MPa | 22,81 | 22,16 |
| Butylacetat | 22,81 | 22,76 |
| Vernetzer gemäß Beispiel 2, 1 Val bl. NCO = 640 g | 93,25 | - |
| Vernetzer gemäß Beispiel 1, 1 Val bl. NCO = 645 g | - | 93,97 |
| Gew.-Tle., Vernetzung, block. NCO : OH = 1:1 | 250,00 | 250,00 |

Mit einer handelsüblichen Lackhantel wird auf einer Glasplatte ein Naßfilm von ca. 90 µm aufgetragen und nach einer Ablüftung von 1 Minute / 23°C in einem Umluftofen 30 Minuten bei 100°C eingebrannt und man mißt die b-Werte (Vergilbung) der Lacke mittels der CieLab-Methode. Danach werden die gleichen Platten 30 Minuten bei 160°C überbrannt und die entsprechenden b-Werte abermals mit der CieLab-Methode gemessen. Der Unterschied der b-Werte, also der Δ b-Werte für die Lacke 1 und 2 lauten folgendermaßen, wobei bekanntlich der höhere Δ b-Wert einer stärkeren Vergilbung entspricht:

| Lack | 1 (Vergleich) | 2 (erfindungsgemäß) |
|---|---|---|
| Δ b-Werte ermittelt nach CieLab-Methode zwischen 30'/100°C und 30'/160°C | 2,6 | 0,5 |

Man erkennt, daß der Lack 2 mit dem formaldehydstabilisierten Polyisocyanatvernetzer einen deutlich geringeren Δ b-Wert von nur 0,5 aufweist.

Der Lack 2 mit dem erfindungsgemäßen Vernetzer (Beispiel 1) vereinigt auf sich folgende Vorteile:
- niedrige Einbrenntemperatur von 30 Min./100°C
- gute Überbrennfestigkeit, Δ b-Wert nur 0,5
- gute lacktechnische Eigenschaften (wurde nicht im Einzelnen erläutert).

## Patentansprüche

1. Aliphatische und/oder cycloaliphatische Polyisocyanate, deren Isocyanatgruppen mit CH-aciden Estern blockiert sind und die einen Gehalt an blockierten Isocyanatgruppen (berechnet als NCO) von insgesamt 5 bis 20, vorzugsweise 7 bis 15 Gew.-% aufweisen, dadurch gekennzeichnet, daß die blockierten Polyisocyanate weiterhin einen Gehalt, bezogen auf Feststoff, an den folgenden stabilisierenden Verbindungen aufweisen:
A) 0,1 bis 5,0 Gew.-% Formaldehyd und gegebenenfalls
B) bis zu 10,0 Gew.-% einer Stabilisator(mischung) aus 1:10 bis 10:1, an
B1) HALS-Aminen, deren Piperidinylstickstoff unsubstituiert ist und
B2) Hydrazidgruppen enthaltenden Verbindungen.

2. Verfahren zur Herstellung der gemäß Anspruch 1 stabilisierten blockierten Polyisocyanate aus
a) 100 Äquivalent-% an aliphatischen und/oder cycloaliphatischen Polyisocyanatkomponenten,
b) 85 bis 100 Äquivalent-% eines Blockierungsmittels aus der Gruppe der CH-aciden Ester,
c) 0 bis 15 Äquivalent-% an einbaubaren Hydrazidverbindungen,
d) 0 bis 5 Gew.-%, bezogen auf blockiertes Polyisocyanat, an Aminen mit der Struktureinheit der Formel (I) 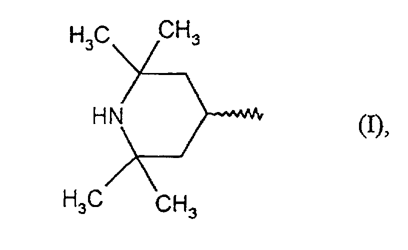 und
e) 0,1 bis 5,0 Gew.-%, bezogen auf blockiertes Polyisocyanat, an Formaldehyd, dadurch gekennzeichnet, daß der Formaldehyd e) nach erfolgter Blockierung der Polyisocyanatkomponente a)zugesetzt wird.

3. Verwendung der blockierten Isocyanate gemäß Anspruch 1 bei der Herstellung von Überzügen.

## Claims

1. Aliphatic and/or cycloaliphatic polyisocyanates, the isocyanate groups of which are blocked with CH-acid esters and which have a content of blocked isocyanate groups (calculated as NCO) of 5 to 20, preferably 7 to 15 wt.% in total, characterized in that the blocked polyisocyanates furthermore have a content, based on the solids, of the following stabilizing compounds:
A) 0.1 to 5.0 wt.% formaldehyde and, optionally,
B) up to 10.0 wt.% of a stabilizer (mixture) of 1:10 to 10:1 of
B1) HALS amines, the piperidinyl nitrogen of which is unsubstituted, and
B2) compounds containing hydrazide groups.

2. Process for the preparation of the blocked polyisocyanates stabilized according to claim 1, from
a) 100 equivalent% aliphatic and/or cycloaliphatic polyisocyanate components,
b) 85 to 100 equivalent% of a blocking agent from the group consisting of CH-acid esters,
c) 0 to 15 equivalent% hydrazide compounds which can be incorporated,
d) 0 to 5 wt.%, based on the blocked polyisocyanate, of amines with the structural unit of the formula (I) 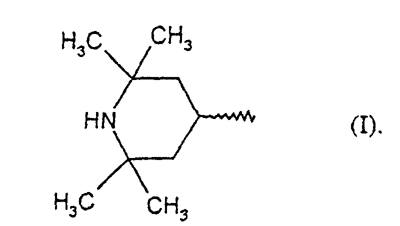 and
e) 0.1 to 5.0 wt.%, based on the blocked polyisocyanate, of formaldehyde, characterized in that the formaldehyde e) is added after blocking of the polyisocyanate component a) has taken place.

3. Use of the blocked isocyanates according to claim 1 in the production of coatings.

## Revendications

1. Polyisocyanates aliphatiques et/ou cycloaliphatiques, dont les radicaux isocyanate sont bloqués par des esters avec CH acide et qui présentent une teneur en radicaux isocyanate bloqués (calculés comme NCO) de au total 5 à 20, de préférence 7 à 15% en poids, caractérisé en ce que le polyisocyanate bloqué présente en outre, une teneur, sur base des matières solides, en les composés stabilisants suivants:
A) 0,1 à 5,0% en poids de formaldéhyde, et facultativement
B) jusqu'à 10,0% en poids d'un (mélange de) stabilisant(s) composé suivant un rapport allant de 1:10 à 10:1 de:
B1) amines HALS, dont l'azote pipéridinyle est non substitué, et
B2) des composés contenant des radicaux hydrazides.

2. Procédé de préparation des polyisocyanates bloqués stabilisés suivant la revendication 1, à partir de:
a) 100% en équivalents de composants polyisocyanate aliphatique et/ou cycloaliphatique;
b) 85 à 100% en équivalents d'un agent de blocage du groupe des esters avec CH acide;
c) 0 à 15% en équivalents d'un composé hydrazide pouvant être incorporé;
d) 0 à 5% en poids, sur base du polyisocyanate bloqué, d'amines avec une unité structurale de formule (I): 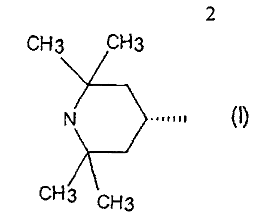 et
e) 0,1 à 5,0% en poids, sur base du polyisocyanate bloqué, de formaldéhyde,
caractérisé en ce que le formaldéhyde e) est ajouté après le blocage du composant polyisocyanate a).

3. Utilisation des isocyanates bloqués suivant la revendication 1, dans la préparation de revêtements.
